# EUROPEAN PATENT APPLICATION

(11) **EP 1 998 467 A1**
(43) Date of publication of application: **03.12.2008**
(21) Application number: 07730400.4
(22) Date of filing: 22.03.2007
(51) Int. Cl.: H04B 3/54

(54) **DEVICE FOR COMMUNICATIONS VIA THE ELECTRICITY MAINS WITH FILTERED AUXILIARY POWER OUTLET**

(30) Priority: 23.03.2006 ES 200600743
(71) Applicant: Diseno de Sistemas en Silicio S.A., 46980 Paterna (Valencia) (ES)
(72) Inventor: BLASCO CLARET, Jorge Vicente, E-46020 Valencia (ES); POVEDA LERMA, Antonio, E-46134 Valencia (ES)
(74) Representative: Ungria Lopez, Javier
(86) International application number: PCT/ES2007/000159
(87) International publication number: WO 2007/107615

(57) **Abstract**

Which permits the coverage of a power line communications, PLC, system to be widely extended by means of using a high-impedance filter integrated into the actual communications equipment, in such a way that avoids the problems inherent to the use of PLC technology in an adverse environment such as that which results from connection of electrical apparatus in the same socket as power line communications equipment.

## Description

### OBJECT OF THE INVENTION

As stated in the title of this specification, the present invention relates to a power line communications device with auxiliary filtered power output, in which the connection of other electrical apparatus is permitted.

The object of the invention is to provide a power line communications device which can be connected to sockets in which it is required to have other electrical apparatus connected without the communications device suffering the adverse effects caused by the power sources of other electrical apparatus, such as the noise and drop in impedance which they produce.

In this document PLC refers to power line communications.

### PRIOR ART OF THE INVENTION

One of the most important parameters for measuring the reliability of a power line communications (PLC) system is the coverage achieved. This coverage depends not just on the dynamic range of the system or of the modulations employed but also on the environment where the system has to function.

In homes, it is very often necessary to connect PLC equipment to sockets that are being shared with other electrical apparatus, such as computers, monitors, televisions, etc. This apparatus is normally equipped with a switched mode power source (SMPS) on account of its simplicity, efficiency and low cost, which, during its functioning, produces electrical alterations in the mains at certain frequencies which are used during the power line communication.

So, filters normally have to be used in order to eliminate the noise introduced by the SMPS into the mains, especially if the PLC equipment is located close to that apparatus. Moreover, the capacitors (EMT), which are included in the SMPS, act as a short-circuit for the PLC signals and so losses are produced of between 20 and 30 dB in the dynamic range of the communication.

In order to solve these problems, the inventive device succeeds in isolating the injection point of the PLC equipment with respect to the rest of the apparatus connected to the mains by means of inserting a high-impedance low-pass filter between the communications equipment and the electrical apparatus. In this way, a high impedance is presented to the communications equipment (instead of the low impedance due to the EMI capacitors) and the noise introduced by the SMPS is filtered out.

There exist documents in the state of the art with other methods, such as that considered in patent US6987430 titled "Power Line Communication System and Power Line Branching Apparatus" which is used for carrying out an adaptation of impedance in power line communications equipment. The present invention provides a different device which manages to avoid the noise introduced by other apparatus connected to the mains and displays the additional advantage of being able to includes the entire unit, communications equipment and filter, in the same device, which represents the main advantage of the invention, which manages to gain coverage by means of implementing the communications equipment and the filter jointly.

Likewise, the inclusion of an auxiliary filtered power outlet in power line communications equipment constitutes a novelty with regard to the existing state of the art.

### DESCRIPTION OF THE INVENTION

In order to achieve the objectives and avoid the drawbacks stated in the previous paragraphs, the invention consists of a power line communications device with auxiliary filtered power output, characterised in that it comprises a filter constructed by means of passive elements, such as inductances and capacitors, which are inserted between the direct connection of the communications device to the mains and the power outlet or filtered auxiliary outlet of that communications device.

An implementation of said filter includes protection against voltage surges in the mains.

The usual manner of embodying the device is to combine the communications equipment and the filter into a single device in such a way that the unit has a connection to the mains and it provides a filtered output to the rest of the devices liable to interfere with it, whether this interference is caused by impedance or noise.

Below, in order to facilitate a better understanding of this specification and forming an integral part thereof, some figures are attached in which, on an illustrative rather than limiting basis, the inventive object has been represented.

### BRIEF DESCRIPTION OF THE FIGURES

Figure 1.- Represents an example in which a filter is placed behind the communications device in such a way that there is an output to the mains and a filtered auxiliary outlet.
Figure 2.- Shows a view in front perspective and another in rear perspective of the device making up the communications equipment and the filter.

### DESCRIPTION OF AN EXAMPLE OF INVENTIVE EMBODIMENT

Given below is a description of an example of inventive embodiment, making reference to the numbering adopted in the figures.

The use of the present invention extends the coverage of a PLC system, to a large degree mitigating the problems caused by the impedance, noise and by the blocking off of one of the sockets which would be used for making power line communications.

PLC modems are usually used in environments in which the power outlet or socket is shared among several devices, which are normally provided with switched power supply sources which, as well as generating noise in the band used for PLC communications, usually have a capacitor just by the input in order to reduce the driven emissions in differential mode (EMC) in the band 150 kHz to 30 MHz. This capacitor performs its function acting as a low impedance for the signals in the band 150 kHz to 30 MHz, which is the band most used for PLC communications. This means that, indirectly, when a modem is positioned in the electrical vicinity of these power supply sources, there are as many EMI suppression capacitors being placed in parallel with the modem as there are power supply sources, and in this way the overall result is equivalent to placing a very high value capacitor in the range of action 150 kHz to 30 MHz in parallel with the PLC modem. When the PLC modem tried to transmit signals, it finds itself with a very low impedance which prevents it from placing a high level of voltage in the power line (the equivalent capacitor behaves like a "short-circuit" at the signal output terminals of the modem), which is equivalent to preventing the modem from being able to inject signal power into the mains. In the same way, any signal reaching the modem will find its level drastically reduced when it encounters a low impedance at the input to it (the modem receives the signal power in the form of a voltage). The end result is a considerable loss of performance by the PLC system.

The attenuation produced by a set of devices connected in the same place as the PLC modem can reach the point of being very harmful for PLC communication depending on the number of pieces of equipment connected and on their proximity to the modem.

In addition to the "short-circuit" effect on the signal, the switched power supply sources introduce broadband noise into the mains, in spite of having to comply with a relatively strict EMC regulation. The use of a filter inserted between the connection point of the PLC modem and the devices originating the noise helps to reduce the noise level at the signal input for the modem.

As stated earlier, the natural functioning environment for a PLC modem is to be surrounded by equipment, with power supplies functioning under a switching system connected to the same place as the PLC modems. These sources provoke a sharp drop in impedance and introduce broadband noise at the connection point, and so if nothing is done in this regard at the connection point, then the use of power line communications technology can become seriously impaired.

Moreover, when a PLC modem is introduced into a socket, the maximum coverage is obtained when it is connected directly into the socket and that socket is not being shared with any other device. The device that is described means that the socket to which the PLC modem is connected does not have to be blocked off since it provides for the incorporation of an auxiliary outlet (2) for other devices without the latter impairing the coverage of the PLC system.

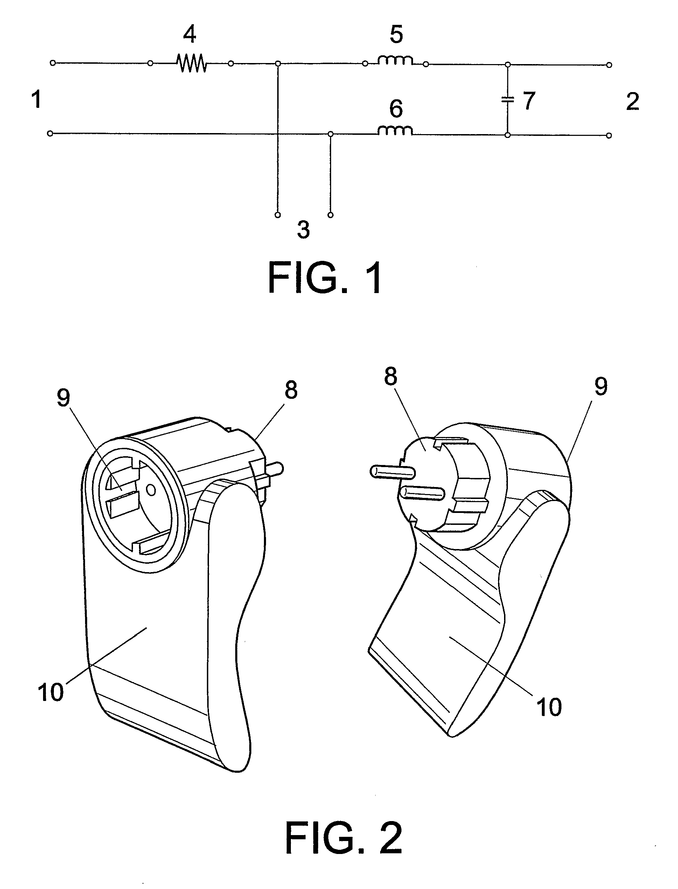

Figure 1 shows an implementation of the filter. Represented in that figure is the socket (1) to the mains and to which the communications device (not represented) is connected at the outlet (3). The auxiliary outlet (2) is a filtered output intended for connecting the rest of the apparatus (not represented) which need to use the mains socket (1). In this example, the filtering is done by means of a capacitor (7) and two inductances (5) and (6). Moreover, a fuse has been introduced, represented by a resistor (4), close to the mains socket (1).

Figure 2 shows by way of example an embodiment of the device in which can be seen the external appearance which the device (10) has, consisting of a combination of integrated communications device plus the filter. As can be seen, the mains socket (1) is not blocked off and it is possible to plug in other electrical apparatus into the auxiliary outlet (2) without suffering the adverse effects of a rise in impedance and noise which they provoke, thus making it possible to have greater coverage in power line communications. The device (10) is connected to the mains using the socket (8) which it incorporates while the rest of the apparatus is connected to the auxiliary outlet (9) instead of directly to the mains. The communications equipment itself is located inside the device (10) along with the filter (5, 6, 7) and the fuse (4).

## Claims

1. **POWER LINE COMMUNICATIONS DEVICE WITH AUXILIARY FILTERED POWER OUTPUT**, **characterised in that** it comprises a filter that includes passive elements, inserted between the direct connection of the communications device to the mains and an auxiliary filtered power outlet.

2. **POWER LINE COMMUNICATIONS DEVICE WITH AUXILIARY FILTERED POWER OUTPUT,** according to claim 1, **characterised in that** the filter includes at least one protection element against voltage surges.

3. **POWER LINE COMMUNICATIONS DEVICE WITH AUXILIARY FILTERED POWER OUTPUT,** according to claim 1, **characterised in that** the communications equipment and the filter are incorporated into a single device, which comprises a connection to the mains and a filtered output for connection of other devices liable to interfere with the communications device due to the effect of impedance or noise.
